# EUROPEAN PATENT APPLICATION

(11) **EP 3 996 088 A1**
(43) Date of publication of application: **11.05.2022**
(21) Application number: 20834874.8
(22) Date of filing: 29.06.2020
(51) Int. Cl.: G10L 17/04, G10L 17/02, G10L 17/18, G10L 21/0272, G06N 3/08

(54) **METHOD AND COMPUTER PROGRAM FOR GENERATING VOICE FOR EACH INDIVIDUAL SPEAKER**

(30) Priority: 03.07.2019 KR 20190080314
(71) Applicant: MINDS LAB INC., Yuseong-gu, Daejeon 34111 (KR)
(72) Inventor: YOO, Tae Joon, Incheon 22324 (KR); JOE, Myun Chul, Seongnam-si, Gyeonggi-do 13601 (KR); CHOI, Hong Seop, Seongnam-si, Gyeonggi-do 13602 (KR)
(74) Representative: Loyer & Abello
(86) International application number: PCT/KR2020/008470
(87) International publication number: WO 2021/002649

(57) **Abstract**

A method of generating a voice for each speaker from audio content including a section in which at least two or more speakers simultaneously speak includes dividing the audio content into one or more single-speaker sections and one or more multi-speaker sections, determining a speaker feature value corresponding to each of the one or more single-speaker sections, generating grouping information by grouping the one or more single-speaker sections based on a similarity of the determined speaker feature value, determining a speaker feature value for each speaker by referring to the grouping information, and generating a voice of each of multiple speakers in each section from each of the one or more multi-speaker sections by using a trained artificial neural network and the speaker feature value for each individual speaker, wherein the artificial neural network includes an artificial neural network that has been trained, based on at least one piece of training data labeled with a voice of a test speaker, as to a feature value of the test speaker included in the training data, and a correlation between a simultaneous speech of a plurality of speakers including the test speaker and the voice of the test speaker.

## Description

### TECHNICAL FIELD

One or more embodiments relate to a method and computer program for generating a voice for each speaker from audio content including a section in which at least two or more speakers speak simultaneously.

### BACKGROUND ART

In various fields, attempts to control objects with human voices or to recognize and use conversations between people have increased. However, the technologies have a drawback in that the accuracy and recognition rate are deteriorated due to the overlapping of voices of two or more speakers in a section in which two or more speakers speak at the same time.

### DESCRIPTION OF EMBODIMENTS

### TECHNICAL PROBLEM

One or more embodiments accurately generate a voice for each speaker from audio content including a section in which two or more speakers simultaneously speak.

In addition, one or more embodiments provide the generated voice of each speaker to a user more efficiently.

In addition, one or more embodiments enable various processing to be described later below (e.g., writing a transcript by using speech to text (STT)), with high accuracy by the generated voice of each speaker.

### TECHNICAL SOLUTION TO PROBLEM

According to one or more embodiments, a method of generating a voice for each speaker from audio content including a section in which at least two or more speakers simultaneously speak includes dividing the audio content into one or more single-speaker sections and one or more multi-speaker sections, determining a speaker feature value corresponding to each of the one or more single-speaker sections, generating grouping information by grouping the one or more single-speaker sections based on a similarity of the determined speaker feature value, determining a speaker feature value for each speaker by referring to the grouping information, and generating a voice of each of multiple speakers in each section from each of the one or more multi-speaker sections by using a trained artificial neural network and the speaker feature value for each individual speaker. The artificial neural network may include an artificial neural network that has been trained, based on at least one piece of training data labeled with a voice of a test speaker, as to a feature value of the test speaker included in the training data, and a correlation between simultaneous speeches of a plurality of speakers including the test speaker and the voice of the test speaker.

The method may further include, before the dividing of the audio content, training the artificial neural network by using training data.

The training of the artificial neural network may include determining a first feature value from first audio content including only a voice of a first speaker, generating synthesized content by synthesizing the first audio content with second audio content, the second audio content including only a voice of a second speaker different from the first speaker, and training the artificial neural network to output the first audio content in response to an input of the synthesized content and the first feature value.

The one or more multi-speaker sections may include a first multi-speaker section. The method may further include, after the generating of the voice of each of the multiple speakers, estimating a voice of a single speaker whose voice is present only in the first multi-speaker section, based on the first multi-speaker section and a voice of each of multiple speakers in the first multi-speaker section.

The estimating of the voice of the single speaker may include generating a voice of a single speaker whose voice is only in the one or more multi-speaker sections by removing a voice of each of the multiple speakers from the first multi-speaker section.

The method may further include, after the generating of the voice of each of the multiple speakers, providing the audio content by classifying voices of the multiple speakers.

The providing of the audio content may include providing the voices of the multiple speakers through distinct channels, respectively, and according to a user's selection of at least one channel, reproducing only the selected one or more voice of the multiple speakers.

The multiple speakers may include a third speaker. The providing of the voices of the multiple speakers through distinct channels may include providing a voice of the third speaker corresponding to visual objects that are listed over time, wherein the visual objects are displayed only in sections corresponding to time zones in which the voice of the third speaker is present.

### ADVANTAGEOUS EFFECTS OF DISCLOSURE

According to one or more embodiments, a voice for each speaker may be accurately generated from audio content including a section in which two or more speakers simultaneously speak.

In particular, according to one or more embodiments, a voice of each speaker may be clearly reproduced by 'generating' rather than simply 'extracting' or 'separating' the voice for each speaker from the audio content.

Further, according to one or more embodiments, the generated voice of each speaker may be more efficiently provided to the user, and may, in particular, be individually listened to.

In addition, according to one or more embodiments, by using the generated voice of each speaker, various processing, which is described later, (e.g., writing a transcript using STT) may be performed with high accuracy.

### BRIEF DESCRIPTION OF DRAWINGS

FIG. 1 is a diagram schematically illustrating a configuration of a voice-generating system, according to an embodiment;
FIG. 2 is a diagram schematically illustrating a configuration of a voice-generating device provided in a server, according to an embodiment;
FIGS. 3 and 4 are diagrams each illustrating an example of a structure of an artificial neural network trained by a voice-generating device, according to one or more embodiments;
FIG. 5 is a diagram illustrating a process of training an artificial neural network by a controller, according to an embodiment;
FIG. 6 is a diagram illustrating a process of generating a training data by a controller, according to an embodiment;
FIG. 7 shows an example in which a controller divides multi-speaker content into one or more single-speaker sections and one or more multi-speaker sections, according to an embodiment;
FIG. 8 is a diagram illustrating a method of generating, by a controller, a voice of each of multiple speakers by using a trained artificial neural network, according to an embodiment;
FIG. 9 is a diagram illustrating a method of estimating, by a controller, a voice of a single speaker in a multi-speaker section that is present only in a multi-speaker section, according to an embodiment;
FIG. 10 is an example of a screen on which multi-speaker content is provided to a user terminal; and
FIG. 11 is a flowchart of a method of generating a voice for each speaker by a voice-generating device, according to an embodiment.

### BEST MODE

According to one or more embodiments, a method of generating a voice for each speaker from audio content including a section in which at least two or more speakers simultaneously speak includes dividing the audio content into one or more single-speaker sections and one or more multi-speaker sections, determining a speaker feature value corresponding to each of the one or more single-speaker sections, generating grouping information by grouping the one or more single-speaker sections based on a similarity of the determined speaker feature value, determining a speaker feature value for each speaker by referring to the grouping information, and generating a voice of each of multiple speakers in each section from each of the one or more multi-speaker sections by using a trained artificial neural network and the speaker feature value for each individual speaker, wherein the artificial neural network includes an artificial neural network that has been trained, based on at least one piece of training data labeled with a voice of a test speaker, as to a feature value of the test speaker included in the training data, and a correlation between a simultaneous speech of a plurality of speakers including the test speaker and the voice of the test speaker.

### MODE OF DISCLOSURE

As embodiments allow for various changes and numerous embodiments, example embodiments will be illustrated in the drawings and described in detail in the written description. Effects and features of the present disclosure, and a method of achieving them will be apparent with reference to the embodiments described below in detail together with the accompanying drawings. The present disclosure may, however, be embodied in many different forms and should not be construed as limited to the example embodiments set forth herein.

Hereinafter, embodiments will be described in detail by explaining example embodiments with reference to the attached drawings. Like reference numerals in the drawings denote like elements, and redundant descriptions thereof are omitted.

In the following embodiments, terms such as "first," and "second," etc., are not used in a limiting meaning, but are used for the purpose of distinguishing one component from another component. In the following embodiments, an expression used in the singular encompasses the expression of the plural, unless it has a clearly different meaning in the context. In the following embodiments, it is to be understood that the terms such as "including," "having," and "comprising" are intended to indicate the existence of the features or components described in the specification, and are not intended to preclude the possibility that one or more other features or components may be added. Sizes of components in the drawings may be exaggerated for convenience of explanation. In other words, since sizes and thicknesses of components in the drawings are arbitrarily illustrated for convenience of explanation, the following embodiments are not limited thereto.

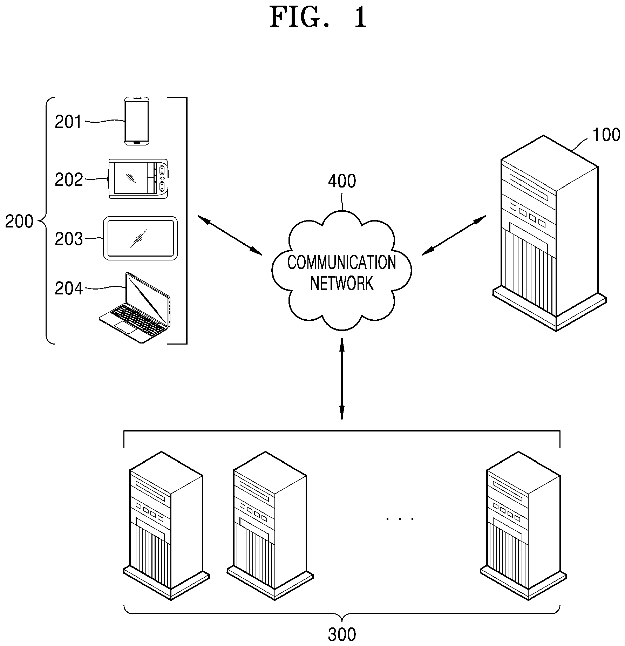

FIG. 1 is a diagram schematically illustrating a configuration of a voice-generating system, according to an embodiment. Referring to FIG. 1, the voice-generating system according to an embodiment may include a server 100, a user terminal 200, an external device 300, and a communication network 400.

The voice-generating system according to an embodiment may generate, by using a trained artificial neural network, a voice of each speaker from audio content that includes a section in which at least two speakers simultaneously speak.

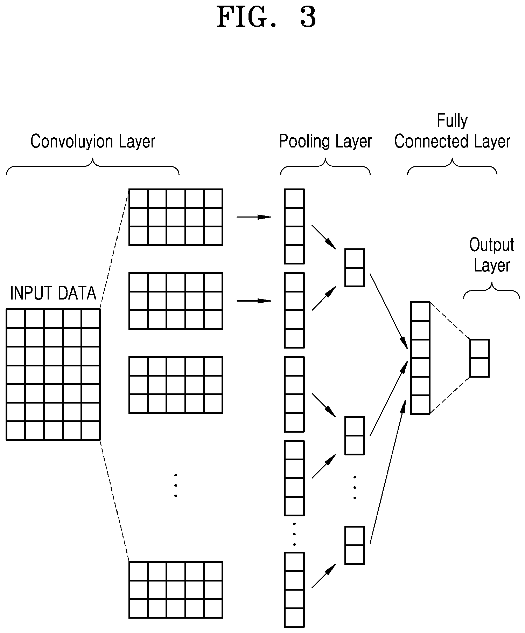

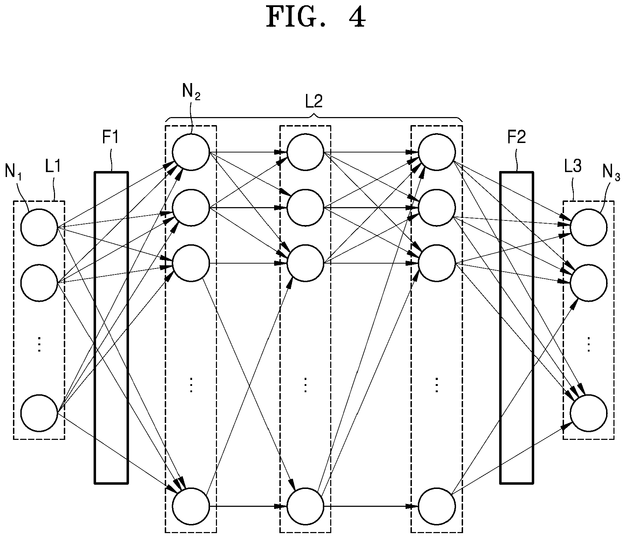

In the present disclosure, the "artificial neural network" is a neural network that is trained appropriately for a service performed by the server 100 and/or the external device 300, and may be trained by using a technique such as machine learning or deep learning. Such a neural network structure is described later below with reference to FIGS. 3 and 4.

In the present disclosure, "speech" may mean a realistic verbal action in which a person speaks out loud. Therefore, when at least two or more speakers speak at the same time, it may mean that at least two or more speakers speak simultaneously and the voices of the two speakers overlap each other.

In the present disclosure, the "section" may mean a time period defined by a start point in time and an endpoint in time. For example, a section may be a time section defined by two time points, such as from 0.037 seconds to 0.72 seconds.

In the present disclosure, the "audio content including a section in which at least two speakers simultaneously speak" (hereinafter, "the multi-speaker content") may mean a multimedia object including a section in which there are two or more speakers and voices of the, for example, two speakers overlap each other. The multi-speaker content may be an object including only audio or may be content in which only audio is separated from an object including audio and video.

In the present disclosure, "to generate a voice" means generating a voice by using one component (a component in the time domain and/or a component in the frequency domain) constituting the voice, and may be distinct from "voice synthesis." Therefore, the voice generation is a method different from a method of synthesizing voices in which pieces of speech (e.g., pieces of speech recorded in phoneme units) previously recorded in preset units are simply stitched together according to an order of a target string.

The user terminal 200 according to an embodiment may mean a device of various forms that mediates the user and the server 100 and/or the external device 300 so that the user may use various services provided by the server 100 and/or the external device 300. In other words, the user terminal 200 according to an embodiment may include various devices that transmit and receive data to and from the server 100 and/or the external device 300.

The user terminal 200 according to an embodiment may be a device that transmits multi-speaker content to the server 100 and receives a voice of each of the multiple speakers generated from the server 100. As illustrated in FIG. 1, the user terminal 200 may include portable terminals 201, 202, and 203 or a computer 204.

The user terminal 200 may include a display means for displaying content or the like in order to perform the above-described function, and an input means for obtaining a user's input for such content. In this case, the input means and the display means may each be configured in various ways. For example, the input means may include a keyboard, a mouse, a trackball, a microphone, a button, and a touch panel, but are not limited thereto.

The external device 300 according to an embodiment may include a device that provides a voice-generating service. For example, the external device 300 may be a device that transmits multi-speaker content to the server 100, receives a voice of each of the multiple speakers from the server 100, and provides the voice received from the server 100 to various devices (for example, a client terminal (not shown)) connected to the external device 300.

In other words, the external device 300 may include a device of a third party for using the voice-generating service provided by the server 100 for its own service. However, this is merely an example, and the use, purpose, and/or quantity of the external device 300 is not limited by the above description.

The communication network 400 according to an embodiment may include a communication network that mediates data transmission and reception between components of the voice-generating system. For example, the communication network 400 may include a wired network such as local area networks (LANs), wide area networks (WANs), metropolitan area networks (MANs), integrated service digital networks (ISDNs), and a wireless network such as wireless LANs, code-division multiple access (CDMA), Bluetooth, satellite communication, and the like. However, the scope of the present disclosure is not limited thereto.

The server 100 according to an embodiment may generate, by using the trained artificial neural network as described above, a voice of each speaker from audio content including a section in which at least two speakers simultaneously speak.

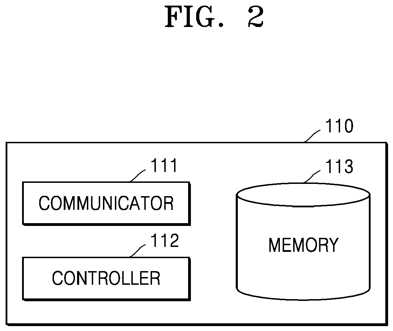

FIG. 2 is a diagram schematically illustrating a configuration of a voice-generating device 110 in the server 100, according to an embodiment.

Referring to FIG. 2, the voice-generating device 110 according to an embodiment may include a communicator 111, a controller 112, and a memory 113. In addition, although not shown in FIG. 2, the voice-generating device 110 according to the present embodiment may further include an input/output unit, a program storage unit, and the like.

The communicator 111 may include a device including hardware and software that is necessary for the voice-generating device 110 to transmit and receive a signal such as control signals or data signals through a wired or wireless connection with another network device such as the user terminal 200 and/or the external device 300.

The controller 112 may include devices of all types that are capable of processing data, such as a processor. Here, the "processor" may include, for example, a data processing device that is embedded in hardware having a circuit physically structured to perform a function represented by code or a command included in a program. A data processing device built into the hardware may include, for example, a processing device such as microprocessors, central processing units (CPUs), processor cores, multiprocessors, and application-specific integrated circuits (ASICs), and field programmable gate arrays (FPGAs), but the scope of the present disclosure is not limited thereto.

The memory 113 temporarily or permanently stores data processed by the voice-generating device 110. The memory may include a magnetic storage medium or a flash storage medium, but the scope of the present disclosure is not limited thereto. For example, the memory 113 may temporarily and/or permanently store data (e.g., coefficients) that constitute an artificial neural network. The memory 113 may also store training data for training artificial neural networks. However, this is merely an example, and the spirit of the present disclosure is not limited thereto.

FIGS. 3 and 4 are diagrams each illustrating an example of a structure of an artificial neural network trained by the voice-generating device 110, according to one or more embodiments.

The artificial neural network according to an embodiment may include an artificial neural network according to a convolutional neural network (CNN) model as illustrated in FIG. 3. At this time, the CNN model may be a hierarchical model that is used to finally extract features of input data by alternately performing a plurality of computational layers (a convolutional layer and a pooling layer).

The controller 112 according to an embodiment may build or train an artificial neural network model by processing training data by using a supervised learning technique. A detailed description of how the controller 112 trains an artificial neural network is described below.

The controller 112 according to an embodiment may generate a convolution layer for extracting a feature value of input data, and a pooling layer for configuring a feature map by combining the extracted feature values.

In addition, the controller 112 according to an embodiment may combine the generated feature maps with each other to generate a fully-connected layer that prepares to determine a probability that the input data corresponds to each of a plurality of items.

Finally, the controller 112 may calculate an output layer including an output corresponding to the input data. For example, the controller 112 may calculate an output layer including at least one frequency component constituting a voice of an individual speaker. However, this is merely an example, and the spirit of the present disclosure is not limited thereto.

In the example shown in FIG. 3, the input data is divided into blocks of a 5 x 7 type, a convolution layer is generated by using unit blocks of a 5 x 7 type, and a pooling layer is generated by using unit blocks of a 1 × 4 type or a 1 × 2 type. However, this is an example, and the spirit of the present disclosure is not limited thereto. Accordingly, the type of input data and/or the size of each block may be configured in various ways.

Meanwhile, such an artificial neural network may be stored in the above-described memory 113 in the form of coefficients of at least one node constituting the artificial neural network, a weight of a node, and coefficients of a function defining a relationship between a plurality of layers included in the artificial neural network. The structure of the artificial neural network may also be stored in the memory 113 in the form of source code and/or programs.

The artificial neural network according to an embodiment may include an artificial neural network according to a recurrent neural network (RNN) model as illustrated in FIG. 4.

Referring to FIG. 4, the artificial neural network according to such an RNN model may include an input layer L1 including at least one input node N1, and a hidden layer L2 including a plurality of hidden nodes N2, and an output layer L3 including at least one output node N3. At this time, a speaker feature value of an individual speaker and multi-speaker content may be input to the at least one input node N1 of the input layer L1. A detailed description of a speaker feature value of an individual speaker will be described later below.

The hidden layer L2 may include one or more fully-connected layers as shown. When the hidden layer L2 includes a plurality of layers, the artificial neural network may include a function (not shown) defining a relationship between the respective hidden layers.

The at least one output node N3 of the output layer L3 may include an output value that is generated by the artificial neural network from input values of the input layer L1 under the control of the controller 112. For example, the output layer L3 may include data constituting a voice of an individual speaker corresponding to the above-described speaker feature value and the multi-speaker content. However, this is merely an example, and the spirit of the present disclosure is not limited thereto.

A value included in each node of each layer may be a vector. In addition, each node may include a weight corresponding to the importance of the corresponding node.

Meanwhile, the artificial neural network may include a first function F1 defining a relationship between the input layer L1 and the hidden layer L2, and a second function F2 defining the relationship between the hidden layer L2 and the output layer L3.

The first function F1 may define a connection relationship between the input node N1 included in the input layer L1 and the hidden node N2 included in the hidden layer L2. Similarly, the second function F2 may define a connection relationship between the hidden node N2 included in the hidden layer L2 and the output node N3 included in the output layer L3.

The functions between the first function F1, the second function F2, and the hidden layer may include an RNN model that outputs a result based on an input of a previous node.

While the artificial neural network is trained by the controller 112, the artificial neural network may be trained as to the first function F1 and the second function F2 based on a plurality of pieces of training data. While the artificial neural network is trained, functions between the plurality of hidden layers may also be trained in addition to the first function F1 and the second function F2 described above.

The artificial neural network according to an embodiment may be trained based on labeled training data according to supervised learning.

The controller 112 according to an embodiment may train, by using a plurality of pieces of training data, an artificial neural network by repeatedly performing a process of refining the above-described functions (the functions between F1, F2, and the hidden layers) so that an output value generated by inputting an input data to the artificial neural network approaches a value labeled in the corresponding training data.

At this time, the controller 112 according to an embodiment may refine the above-described functions (the functions between F1, F2, and the hidden layers) according to a back propagation algorithm. However, this is merely an example, and the spirit of the present disclosure is not limited thereto.

Meanwhile, the types and/or structures of the artificial neural networks described with reference to FIGS. 3 and 4 are examples, and the spirit of the present disclosure is not limited thereto. Therefore, an artificial neural network of various kinds of models may correspond to the "artificial neural network" described throughout the specification.

Hereinafter, a process of training an artificial neural network is first described, and a method of generating a voice by using the trained artificial neural network is described later.

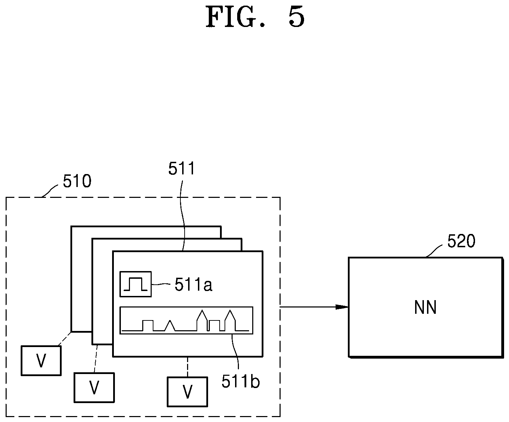

FIG. 5 is a diagram illustrating a process of training an artificial neural network 520 by the controller 112, according to an embodiment.

In the present disclosure, the artificial neural network 520 may include an artificial neural network that has been trained (or is trained), based on at least one piece of training data 510 with a labeled voice of a test speaker, as to feature values of the test speaker included in the training data and a correlation between simultaneous speech of multiple speakers and a voice of the test speaker.

In other words, in the present disclosure, the artificial neural network 520 may include a neural network that has been trained (or is trained) to output a voice corresponding to an input speaker feature value in response to an input of the speaker feature value and the multi-speaker content.

Meanwhile, the at least one piece of training data 510 for training the artificial neural network 520 may include the feature values of the test speaker and the simultaneous speech of multiple speakers including the test speaker as described above, and the labeled voice of the test speaker (included in the simultaneous speech of the multiple speakers). For example, first training data 511 may include a feature value 511a of the test speaker and a simultaneous speech 511b of multiple speakers including the test speaker, and a voice V of the test speaker included in the simultaneous speech 511b in a labeled manner.

The controller 112 according to an embodiment may generate at least one piece of training data 510 for training the artificial neural network 520. Hereinafter, a process of generating the first training data 511 by the controller 112 is described below as an example.

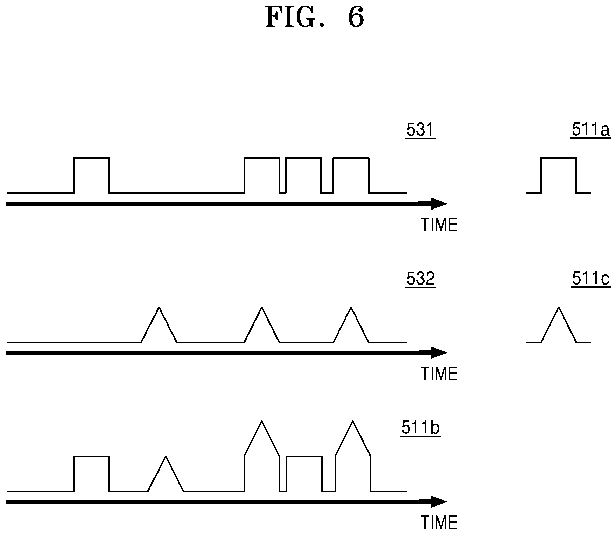

FIG. 6 is a diagram illustrating a process of generating the training data 511 by the controller 112, according to an embodiment.

The controller 112 according to an embodiment may determine the first feature value 511a from first audio content 531 including only the voice of a first speaker. In this case, the first feature value 511a is an object of various types that represents voice characteristics of the first speaker, and may be in the form of, for example, a vector defined in multiple dimensions. However, this is merely an example, and the spirit of the present disclosure is not limited thereto.

Similarly, the controller 112 may determine a second feature value 511c from second audio content 532 including only the voice of a second speaker (a speaker different from the first speaker described above). Of course, the second feature value 511c is an object of various types that represents voice characteristics of the second speaker, and may be in the form of, for example, a vector defined in multiple dimensions.

The controller 112 may generate synthesized content 511b by synthesizing the first audio content 531 with the second audio content 532. In this case, the synthesized content 511b may include a section in which two speakers simultaneously speak, as shown in FIG. 6.

The controller 112 according to an embodiment may train the artificial neural network 520 to output the first audio content 531 in response to an input of the synthesized content 511b and the first feature value 511a. Similarly, the controller 112 may also train the artificial neural network 520 to output the second audio content 532 in response to an input of the synthesized content 511b and the second feature value 511c.

Meanwhile, FIGS. 5 to 9 and 10 briefly show the audio content in the form in which a figure corresponding to a feature value of the corresponding speaker is displayed in a section in which speech is made over time. For example, in the case of the first audio content 531 of FIG. 6, a figure (square waveform) corresponding to the feature value of the first speaker is in a section in which speech is made by the first speaker.

In addition, when a speech is made by two or more speakers at the same time, figures corresponding to the feature values of the speakers in the corresponding time section are synthesized with each other. For example, in the case of the synthesized content 511b of FIG. 6, figures respectively corresponding to the feature values of the two speakers are synthesized with each other in the section where the first speaker and the second speaker simultaneously speak.

Such an illustration is for convenience of description only, and the spirit of the present disclosure is not limited thereto.

A method of generating a voice of an individual speaker from multi-speaker content by using the trained artificial neural network 520 is described below, on the premise that the artificial neural network 520 is trained based on the training data 510 according to the process described above.

The controller 112 according to an embodiment may divide multi-speaker content into one or more single-speaker sections and one or more multi-speaker sections.

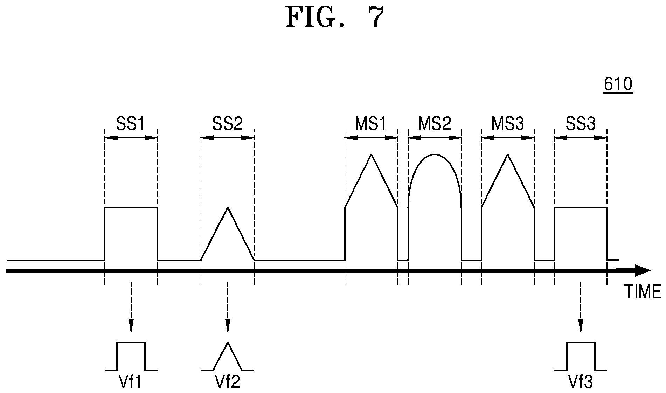

FIG. 7 shows an example in which the controller 112 divides multi-speaker content 610 into one or more single-speaker sections SS1, SS2, and SS3 and one or more multi-speaker sections MS1, MS2, and MS3, according to an embodiment.

In the present disclosure, the "single-speaker sections" SS1, SS2, and SS3 may each include a time section in which only one speaker's voice is in the multi-speaker content 610. In the present disclosure, the "multi-speaker sections" MS1, MS2, and MS3 may each include a time section in which voices of two or more speakers are in the multi-speaker content 610. Each of the sections SS1, SS2, SS3, MS1, MS2, and MS3 may be defined by a start point and an endpoint on the time axis of the multi-speaker content 610.

The controller 112 according to an embodiment may divide the multi-speaker content 610 into one or more single-speaker sections SS1, SS2, and SS3 and one or more multi-speaker sections MS1, MS2, and MS3 by using various known techniques. For example, the controller 112 may classify sections based on the diversity of frequency components included in a certain time section. However, this is merely an example, and the spirit of the present disclosure is not limited thereto.

The controller 112 according to an embodiment may determine speaker feature values Vf1, Vf2, and Vf3 respectively corresponding to the one or more single-speaker sections SS1, SS2, and SS3 that are divided by the above-described process by a certain method. At this time, the controller 112 may use various known techniques.

For example, the controller 112 may determine the feature values Vf1, Vf2, and Vf3 respectively corresponding to the one or more single-speaker sections SS1, SS2, and SS3 by using a separate artificial neural network (in this case, the artificial neural network may include an artificial neural network that is trained to generate feature vectors from a voice). However, this is merely an example, and the spirit of the present disclosure is not limited thereto.

In multi-speaker content, there may be multiple single-speaker sections by the same speaker. For example, as shown in FIG. 7, there may be two single-speaker sections SS1 and SS3 by the first speaker. The controller 112 according to an embodiment, when there are a plurality of single-speaker sections by the same speaker, in order to process the plurality of sections by the same speaker, may group one or more single-speaker sections and generate grouping information based on the similarity of the speaker feature values Vf1, Vf2, and Vf3 with respect to the plurality of sections. In addition, the controller 112 may determine a speaker feature value for each speaker by referring to the grouping information.

For example, the controller 112 may group the single speaker sections SS1 and SS3 by the first speaker and determine the average of the speaker feature values Vf1 and Vf3 in each of the single-speaker sections SS1 and SS3 to be the feature value of the first speaker. In this case, when each of the speaker feature values Vf1 and Vf3 is a vector, the determined feature value of the first speaker may be an average vector of the speaker feature values Vf1 and Vf3.

Meanwhile, when the single-speaker section by the same speaker is singular, the controller 112 may determine a speaker feature value in the singular section to be the feature value of the corresponding speaker. For example, the controller 112 may determine the speaker feature value Vf2 corresponding to the single-speaker section SS2 to be the speaker feature value of the second speaker. However, this is an example, and a method of grouping a plurality of values and extracting a representative value from the grouped values may be used without limitation.

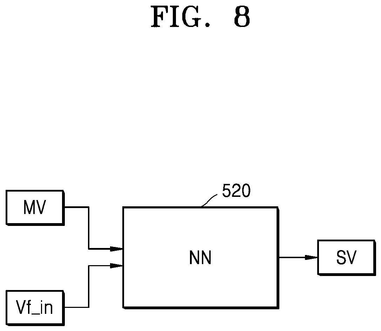

FIG. 8 is a diagram illustrating a method of generating a voice SV for each of multiple speakers by using the trained artificial neural network 520 by the controller 112, according to an embodiment.

The controller 112 according to an embodiment, by using the trained artificial neural network 520 and a speaker feature value Vf_in for each of the multiple speakers, the controller 112 may generate, from at least one multi-speaker section, a voice SV of each speaker present in each of the at least one multi-speaker section. For example, the controller 112 may input the feature value Vf2 of the second speaker and the first multi-speaker section MS1 (in FIG. 7) to the trained artificial neural network 520 and generate, as an output thereof, a voice SV of the second speaker in the first multi-speaker section MS1 (in FIG. 7). Of course, the controller 112 may generate a voice SV of the first speaker from the first multi-speaker section and may also generate a voice of the third speaker from the second multi-speaker section in a similar way.

In some cases, in the multi-speaker section, there may be a single speaker whose voice is only in the multi-speaker section. In other words, there may be a single speaker who is not present in any of the single-speaker sections.

In this way, the controller 112 according to an embodiment may estimate a voice in the multi-speaker section of a single speaker whose voice is only in the multi-speaker section.

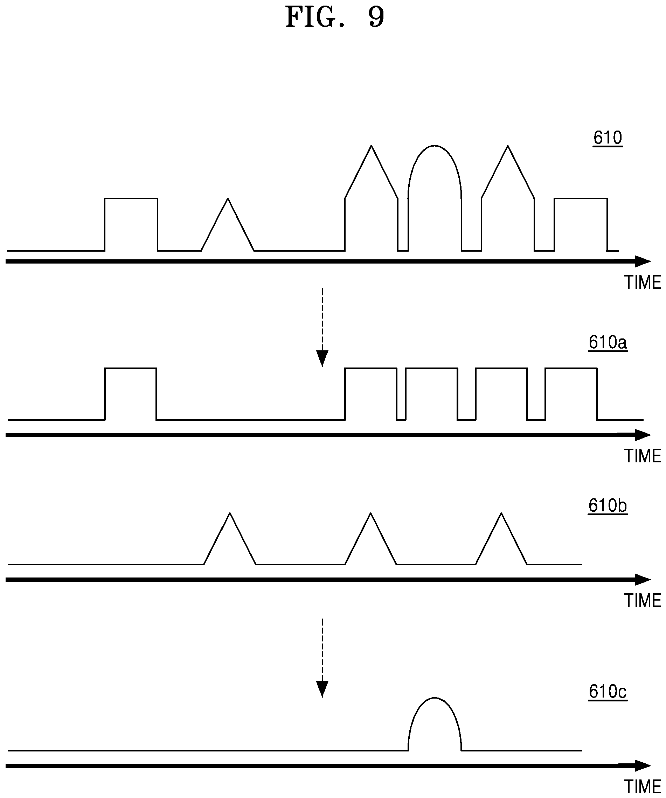

FIG. 9 is a diagram illustrating a method of estimating, by the controller 112, a voice in a multi-speaker section of a single speaker whose voice is only in a multi-speaker section, according to an embodiment.

For convenience of explanation, it is assumed that multi-speaker audio content 610 is as shown, that a single-speaker section is present for each of the first speaker and the second speaker and single-speaker speeches 610a and 620b for the respective speakers are generated as shown, and that estimation of a single-speaker speech for the third speaker is necessary.

Under the assumption described above, the controller 112 according to an embodiment may generate a voice of a single speaker (i.e., the third speaker) whose voice is only in the multi-speaker section by removing the generated single-speaker speeches 610a and 620b from the multi-speaker audio content 610.

In other words, the controller 112 according to an embodiment may remove a voice of each of the multiple speakers generated by the artificial neural network from a specific multi-speaker section according to the above-described process, and generate a voice of a single speaker present only in the corresponding multi-speaker section. Accordingly, a voice for a speaker who spoke only in the multi-speaker section may be generated.

The controller 112 according to an embodiment may provide multi-speaker content by classifying voices of the multiple speakers.

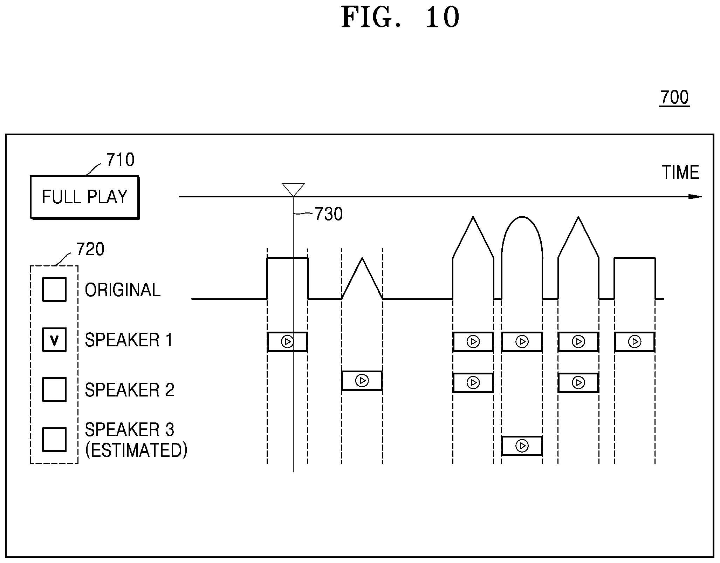

FIG. 10 is an example of a screen 700 on which multi-speaker content is provided to the user terminal 200.

The controller 112 according to an embodiment may provide the voices of multiple speakers through distinct channels, respectively. In addition, the controller 112 may provide only the voices of one or more selected speakers according to the user's selection of at least one channel.

For example, as shown on the screen 700, the controller 112 may display the voices of the speakers through different channels and may display check boxes 720 for selecting a desired channel. The user may listen to only the voice of a desired speaker by selecting one or more channels in the check box 720 and pressing a full play button 710. In this case, the controller 112 may also display a current playing time point by using a timeline 730.

When a voice of a specific speaker is present only in the multi-speaker section and the voice of the corresponding speaker is estimated through the other speakers, the controller 112 may display that the voice of the corresponding speaker is estimated, as shown by the "speaker 3 (estimated)" label.

The controller 112 according to an embodiment provides a voice of each speaker corresponding to visual objects that are listed over time, but may display the visual objects only in sections corresponding to time zones in which the corresponding speaker's voice is in. For example, in the case of speaker 1, a visual object may be displayed only in the first and third to sixth sections, and the voice of speaker 1 in the corresponding section may correspond to each of the displayed visual objects. The user may perform an input (e.g., click) to an object, and thus, only the voice of the corresponding speaker in the corresponding section may be identified.

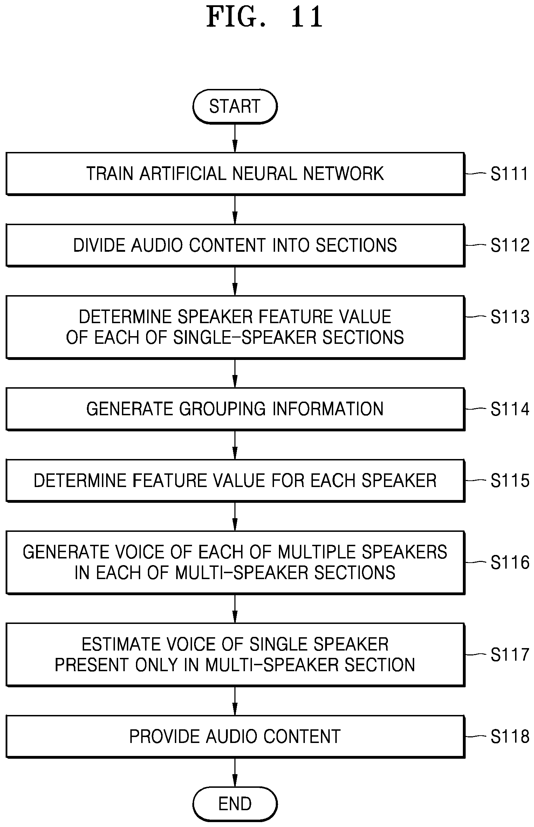

FIG. 11 is a flowchart of a method of generating a voice for each speaker by the voice-generating device 110, according to an embodiment. Description is made below also with reference to FIGS. 1 to 10, but descriptions previously given with respect to FIGS. 1 to 10 are omitted.

The voice-generating device 110 according to an embodiment may train an artificial neural network, in operation S111 .FIG. 5 is a diagram illustrating a process of training the artificial neural network 520 by the voice-generating device 110, according to an embodiment.

In the present disclosure, the artificial neural network 520 may include an artificial neural network that has been trained (or is trained), based on at least one piece of training data 510 in which a voice of a test speaker is labeled, as to feature values of the test speaker included in the training data and a correlation between a simultaneous speech of multiple speakers and a voice of the test speaker.

In other words, in the present disclosure, the artificial neural network 520 may include a neural network that has been trained (or is trained) to output a voice corresponding to an input speaker feature value corresponding to an input of the speaker feature value and the multi-speaker content.

Meanwhile, the at least one piece of training data 510 for training the artificial neural network 520 may include feature values of the test speaker and the simultaneous speech of multiple speakers including the test speaker as described above, and may include the voice of the test speaker (included in the simultaneous speech of the multiple speakers) in a labeled manner. For example, first training data 511 may include a feature value 511a of the test speaker and a simultaneous speech 511b of multiple speakers including the test speaker, and may include a voice V of the test speaker included in the simultaneous speech 511b in a labeled manner.

The voice-generating device 110 according to an embodiment may generate at least one piece of training data 510 for training the artificial neural network 520. Hereinafter, a process of generating the first training data 511 by the voice-generating device 110 is described as an example.

FIG. 6 is a diagram illustrating a process of generating the training data 511 by the voice-generating device 110, according to an embodiment.

The voice-generating device 110 according to an embodiment may determine the first feature value 511a from first audio content 531 that includes only the voice of a first speaker. In this case, the first feature value 511a is an object of various types that represents voice characteristics of the first speaker, and may be in the form of, for example, a vector defined in multiple dimensions. However, this is merely an example, and the spirit of the present disclosure is not limited thereto.

Similarly, the voice-generating device 110 may determine a second feature value 511c from second audio content 532 including only the voice of a second speaker (a speaker different from the first speaker described above). Of course, the second feature value 511c is an object of various types that represents voice characteristics of the second speaker, and may be in the form of, for example, a vector defined in multiple dimensions.

The voice-generating device 110 may generate synthesized content 511b by synthesizing the first audio content 531 with the second audio content 532. In this case, the synthesized content 511b may include a section in which two speakers simultaneously speak, as shown in FIG. 6.

The voice-generating device 110 according to an embodiment may train the artificial neural network 520 to output the first audio content 531 in response to an input of the synthesized content 511b and the first feature value 511a. Similarly, the voice-generating device 110 may also train the artificial neural network 520 to output the second audio content 532 in response to an input of the synthesized content 511b and the second feature value 511c.

Meanwhile, FIGS. 5 to 9 and 10 briefly show audio content in the form in which a figure corresponding to a feature value of the corresponding speaker is displayed in a section in which speech is made over time. For example, in the case of the first audio content 531 of FIG. 6, a figure (square waveform) corresponding to the feature value of the first speaker is in a section in which speech is made by the first speaker.

In addition, when a speech is made by two or more speakers at the same time, figures corresponding to the feature values of the speakers in the corresponding time period are synthesized with each other. For example, in the case of the synthesized content 511b of FIG. 6, figures respectively corresponding to the feature values of the two speakers are synthesized with each other in the section where the first speaker and the second speaker simultaneously speak.

Such an illustration is for convenience of description only, and the spirit of the present disclosure is not limited thereto.

A method of generating a voice of an individual speaker from multi-speaker content by using the trained artificial neural network 520 is described below, on the premise that the artificial neural network 520 is trained according to operation S111 based on the training data 510.

The voice-generating device 110 according to an embodiment may divide multi-speaker content into one or more single-speaker sections and one or more multi-speaker sections, in operation S112.

FIG. 7 shows an example in which the voice-generating device 110 divides multi-speaker content 610 into one or more single-speaker sections SS1, SS2, and SS3 and one or more multi-speaker sections MS1, MS2, and MS3, according to an embodiment.

In the present disclosure, the "single-speaker sections" SS1, SS2, and SS3 may include a time section in which only one speaker's voice is in the multi-speaker content 610. In the present disclosure, the "multi-speaker sections" MS1, MS2, and MS3 may include a time section in which voices of two or more speakers are present in the multi-speaker content 610. Each of the sections SS1, SS2, SS3, MS1, MS2, and MS3 may be defined by a start point and an endpoint on the time axis of the multi-speaker content 610.

The voice-generating device 110 according to an embodiment may divide the multi-speaker content 610 into one or more single-speaker sections SS1, SS2, and SS3 and one or more multi-speaker sections MS1, MS2, and MS3 by using various known techniques. For example, the voice-generating device 110 may classify sections based on the diversity of frequency components included in a certain time section. However, this is merely an example, and the spirit of the present disclosure is not limited thereto.

The voice-generating device 110 according to an embodiment may determine speaker feature values Vf1, Vf2, and Vf3 respectively corresponding to the one or more single-speaker sections SS1, SS2, and SS3 divided by the above-described process by a certain method, in operation S113.At this time, the voice-generating device 110 may use various known techniques. For example, the voice-generating device 110 may determine the feature values Vf1, Vf2, and Vf3 respectively corresponding to the one or more single-speaker sections SS1, SS2, and SS3 by using a separate artificial neural network (in this case, the artificial neural network includes an artificial neural network that is trained to generate feature vectors from a voice). However, this is merely an example, and the spirit of the present disclosure is not limited thereto.

In multi-speaker content, there may be multiple single-speaker sections by the same speaker. For example, as shown in FIG. 7, there may be two single-speaker sections SS1 and SS3 by the first speaker. The voice-generating device 110 according to an embodiment, when there are a plurality of single-speaker sections by the same speaker, in order to process the plurality of sections to be by the same speaker, may group one or more single-speaker sections and generate grouping information based on the similarity of the speaker feature values Vf1, Vf2, and Vf3 with respect to the plurality of sections, in operation S114.In addition, the voice-generating device 110 may determine a speaker feature value for each individual speaker by referring to the grouping information, in operation S115.

For example, the voice-generating device 110 may group the single-speaker sections SS1 and SS3 by the first speaker, and determine the average of the speaker feature values Vf1 and Vf3 in each of the single-speaker sections SS1 and SS3 to be the feature values of the first speaker. In this case, when each of the speaker feature values Vf1 and Vf3 is a vector, the determined feature value of the first speaker may be an average vector of the speaker feature values Vf1 and Vf3.

Meanwhile, when the single-speaker section by the same speaker is singular, the voice-generating device 110 may determine the speaker feature value in the singular section to be the feature value of the corresponding speaker. For example, the voice-generating device 110 may determine the speaker feature value Vf2 corresponding to the single-speaker section SS2 to be the speaker feature value of the second speaker. However, this is an example, and a method of grouping a plurality of values and extracting a representative value from the grouped values may be used without limitation.

FIG. 8 is a diagram illustrating a method of generating, by the voice-generating device 110, a voice SV for each of multiple speakers by using the trained artificial neural network 520, according to an embodiment.

By using the trained artificial neural network 520 and a speaker feature value Vf_in for each speaker, the voice-generating device 110 according to an embodiment may generate, from the at least one multi-speaker section, a voice SV of each of the multiple speakers in each of at least one multi-speaker section, in operation S116.For example, the voice-generating device 110 may input the feature value Vf2 of the second speaker and the first multi-speaker section MS1 (in FIG. 7) to the trained artificial neural network 520 and may generate, as an output thereof, a voice SV of the second speaker in the first multi-speaker section MS1 (in FIG. 7). Of course, the voice-generating device 110 may generate a voice SV of the first speaker from the first multi-speaker section, and a voice of the third speaker from the second multi-speaker section in a similar way.

In some cases, in the multi-speaker section, there may be a single speaker whose voice is only in the multi-speaker section. In other words, there may be a single speaker who is not present in any single-speaker section.

In this way, the voice-generating device 110 according to an embodiment may estimate a voice in the multi-speaker section of a single speaker whose voice is only in the multi-speaker section, in operation S117.

FIG. 9 is a diagram illustrating a method of estimating, by the voice-generating device 110, a voice in a multi-speaker section of a single speaker whose voice is only in a multi-speaker section, according to an embodiment.

For convenience of explanation, it is assumed that multi-speaker audio content 610 is as shown, that a single-speaker section is present for each of the first speaker and the second speaker and single speeches 610a and 620b for the respective speakers are generated as shown, and that estimation of a single-speaker speech for the third speaker is required.

Under the assumption described above, the voice-generating device 110 according to an embodiment may generate a voice of a single speaker (i.e., the third speaker) whose voice is present only in the multi-speaker section by removing the generated single-speaker speeches 610a and 620b from the multi-speaker audio content 610.

In other words, the voice-generating device 110 according to an embodiment may remove a voice of each of the multiple speakers generated by the artificial neural network from a specific multi-speaker section according to the above-described process and may generate a voice of a single speaker that is present only in the corresponding multi-speaker section. Accordingly, a voice for a speaker who spoke only in the multi-speaker section of the present disclosure may be generated.

The voice-generating device 110 according to an embodiment may provide multi-speaker content by classifying voices of multiple speakers, in operation S118.

FIG. 10 is an example of a screen 700 on which multi-speaker content is provided to the user terminal 200.

The voice-generating device 110 according to an embodiment may provide each of the voices of multiple speakers through distinct channels. Also, the voice-generating device 110 may provide only the voices of one or more selected speakers according to the user's selection of at least one channel.

For example, as shown on the screen 700, the voice-generating device 110 may display the voices of each speaker in a different channel and may display a check box 720 for selecting a desired channel. The user may listen to only the voice of a desired speaker by selecting one or more channels in the check boxes 720 and pressing a full play button 710. In this case, the voice-generating device 110 may also display a current playing time point by using a timeline 730.

When a voice of a specific speaker is present only in the multi-speaker section and the voice of the corresponding speaker is estimated by the other speakers, the voice-generating device 110 may display that the voice of the corresponding speaker is estimated, as shown by the "speaker 3 (estimated)" label.

The voice-generating device 110 according to an embodiment provides a voice of each speaker corresponding to visual objects that are listed over time, but may display the visual objects only in sections corresponding to time zones in which the corresponding speaker's voice is in. For example, in the case of speaker 1, a visual object may be displayed only in the first and third to sixth sections, and the voice of speaker 1 in the corresponding section may correspond to each of the displayed visual objects. The user may perform an input (e.g., click) to an object, and thus, only the voice of the corresponding speaker in the corresponding section may be easily checked.

The embodiment according to the disclosure described above may be implemented in the form of a computer program that may be executed through various components on a computer, which may be recorded in a computer-readable recording medium. In this case, the medium may store a program executable by a computer. Examples of media include magnetic media such as hard disks, floppy disks, and magnetic tapes, optical recording media such as CD-ROMs and DVDs, magnetooptical media such as floptical disks, and ROM, RAM, flash memory, and the like, and may be configured to store program instructions.

Meanwhile, the computer program may be specially designed and configured for the present disclosure, or may be known and usable to those of skill in the computer software field. Examples of the computer program may include not only machine language code produced by a compiler but also high-level language code that can be executed by a computer by using an interpreter or the like.

The specific implementations described in the present disclosure are examples, and do not limit the scope of the present disclosure in any way. For brevity of the specification, descriptions of conventional electronic configurations, control systems, software, and other functional aspects of the systems may be omitted. In addition, the connection or connection members of the lines between the components shown in the drawings exemplarily represent functional connections and/or physical or circuit connections, and may be represented as replaceable and additional various functional connections or circuit connections in an actual device. In addition, if there is no specific mention such as "essential," "important," or the like, it may not be an essential component for the application of the present disclosure.

Therefore, the spirit of the present disclosure should not be defined as being limited to the above-described embodiments, and the following claims as well as all ranges equivalent to or equivalently changed from the claims belong to the scope of the spirit of the present disclosure.

## Claims

1. A method of generating a voice for each speaker from audio content including a section in which at least two or more speakers simultaneously speak, the method comprising:
dividing the audio content into one or more single-speaker sections and one or more multi-speaker sections;
determining a speaker feature value corresponding to each of the one or more single-speaker sections;
generating grouping information by grouping the one or more single-speaker sections based on a similarity of the determined speaker feature value;
determining a speaker feature value for each speaker by referring to the grouping information; and
generating a voice of each of multiple speakers in each section from each of the one or more multi-speaker sections by using a trained artificial neural network and the speaker feature value for each individual speaker,
wherein the artificial neural network includes an artificial neural network that has been trained, based on at least one piece of training data labeled with a voice of a test speaker, as to a feature value of the test speaker included in the training data, and a correlation between a simultaneous speech of a plurality of speakers including the test speaker and the voice of the test speaker.

2. The method of claim 1, further comprising, before the dividing of the audio content, training the artificial neural network by using training data.

3. The method of claim 2, wherein the training of the artificial neural network comprises:
determining a first feature value from first audio content including only a voice of a first speaker;
generating synthesized content by synthesizing the first audio content with second audio content, the second audio content including only a voice of a second speaker different from the first speaker; and
training the artificial neural network to output the first audio content in response to an input of the synthesized content and the first feature value.

4. The method of claim 1, wherein
the one or more multi-speaker sections comprise a first multi-speaker section, and
the method further comprises,
after the generating of the voice of each of the multiple speakers,
estimating a voice of a single speaker whose voice is present only in the first multi-speaker section, based on the first multi-speaker section and a voice of each of multiple speakers in the first multi-speaker section.

5. The method of claim 4, wherein the estimating of the voice of the single speaker comprises generating a voice of a single speaker whose voice is only in the one or more multi-speaker sections by removing a voice of each of the multiple speakers from the first multi-speaker section.

6. The method of claim 1, further comprising, after the generating of the voice of each of the multiple speakers, providing the audio content by classifying voices of the multiple speakers.

7. The method of claim 6, wherein the providing of the audio content comprises:
providing the voices of the multiple speakers through distinct channels, respectively; and
according to a user's selection of at least one channel, reproducing only the selected one or more voice of the multiple speakers.

8. The method of claim 7, wherein
the multiple speakers include a third speaker, and
the providing of the voices of the multiple speakers through distinct channels comprises
providing a voice of the third speaker corresponding to visual objects that are listed over time, wherein the visual objects are displayed only in sections corresponding to time zones in which the voice of the third speaker is present.

9. A computer program stored in a medium for executing the method of any one of claims 1 to 8 by a computer.
